# EUROPÄISCHE PATENTSCHRIFT

(11) **EP 0 439 685 B1**
(45) Veröffentlichungstag und Bekanntmachung des Hinweises auf die Patenterteilung: **15.09.1993**
(21) Anmeldenummer: 90120217.6
(22) Anmeldetag: 22.10.1990
(51) Int. Cl.: F16F 1/36, B60K 5/12

(54) **Buchsenlager**
Brush-like support
Support en forme de manchon

(30) Priorität: 18.11.1989 DE 3938383
(43) Veröffentlichungstag der Anmeldung: 07.08.1991
(73) Patentinhaber: METZELER GIMETALL AG, D-80992 München (DE)
(72) Erfinder: Richter, Matthias, Dr., W-8084 Inning (DE)
(74) Vertreter: Seibert, Hannelore

(56) Entgegenhaltungen:
- EP-A- 0 118 887
- EP-A- 0 324 693
- EP-A- 0 351 738
- DE-A- 2 755 117
- FR-A- 2 555 688

## Beschreibung

Die Erfindung bezieht sich auf ein Buchsenlager, insbesondere für Kraftfahrzeuge, mit einer zylindrischen Außenbuchse und einer innenliegenden, elastischen Abstützung eines Lagerbolzens, wobei innerhalb der Außenbuchse ein ringförmiger Körper angeordnet ist, der in einem diskreten Umfangsbereich elastisch an die Außenbuchse angekoppelt ist und eine über eine Gummizwischenlage an den ringförmigen Körper angekoppelte Innenbuchse zur Aufnahme des Lagerbolzens aufweist.

Eine derartige Lagerbuchse ist aus der FR-A-2 555 688 bekannt. Dabei sind drei konzentrisch zueinander angeordnete zylindrische Metallbuchsen vorgesehen, die untereinander über sich jeweils einen Teilbereich des Umfangs erstreckenden und zueinander versetzt liegenden Gummipolstern miteinander verbunden und gegeneinander abgestützt sind. Derartige Buchsenlager wie auch Buchsenlager, die beispielsweise aus der DE-C-2 755 117 bekannt sind, dienen zur Schwingungsdämpfung und Minimierung der Geräuschübertragung. Sie haben jedoch den Nachteil, daß die statische Einfederung mit der Belastungszeit infolge des Setzens des Gummis zunimmt und daß dann bei einem vorzeitigen Eingreifen der Druckanschläge eine Verschlechterung der akustischen Isolationswirkung bedingt ist. Darüberhinaus weist Gummi eine dynamische Verhärtung auf, so daß sich mit steigender Frequenz eine zunehmende dynamische Steifigkeit des Lagers und damit eine Begünstigung der Ubertragung hochfrequenter Schwingungen ergibt. Zur Uberwindung dieser nachteiligen Materialeigenschaften des Gummis ist es aus der EP-A-0 324 693 bekannt, die im wesentlichen tragenden Elemente eines elastischen Stützlagers aus einem ringförmigen Federkörper aus faserverstärktem Kunststoff auszubilden, wodurch Federelemente geschaffen werden können, die optimale Federeigenschaften ohne statisches Setzen und ohne dynamische Verhärtung aufweisen.

Der vorliegenden Erfindung liegt daher die Aufgabe zugrunde, ein Buchsenlager zu schaffen, das unter Verwendung derartiger Federelemente aus faserverstärktem Kunststoff zur schwingungsisolierenden Lagerung von Antriebsaggregaten als auch als wartungsfreies Lager zum Ausgleich von oszillierenden Bewegungen mit kleinen Weg- oder Winkelamplituden eingesetzt werden kann.

Zur Lösung dieser Aufgabe ist erfindungsgemäß vorgesehen, daß der ringförmige Körper als Federkörper ausgebildet ist, aus faserverstärktem Kunststoff besteht und bezogen auf den Umfangsbereich der elastischen Ankopplung des Federkörpers an die Außenbuchse im gegenüberliegenden Umfangsbereich die Gummizwischenlage aufweist.

Damit ergibt sich also ein Federungssystem, das die Vorteile eines Federkörpers aus faserverstärktem Kunststoff mit den sicherheitstechnischen und montagetechnischen Vorteilen eines Buchsenlagers kombiniert, wobei zusätzlich mit einfachen Mitteln S-förmige Federkennlinien zu realisieren sind, mit denen sich niedrige statische und dynamische Steifigkeiten im Arbeitspunkt und ein progressives Verhalten im Zug- und im Druckbereich außerhalb des Arbeitspunktes ergeben.

Zweckmäßig ist es dabei, wenn der ringförmige Federkörper einen ovalen oder elliptischen Querschnitt aufweist, so daß damit unterschiedliche Federhärten in Hoch- und in Querrichtung realisierbar sind. Zweckmäßig ist es ferner, wenn bei einem solchen Lager die Innenbuchse aus einem U-förmigen Bügel besteht, der sich mit seinem zwischen den beiden freien Schenkeln erstreckenden Basisteil in Achsrichtung des ringförmigen Federkörpers erstreckt und in seinen freien Schenkeln Bohrungen zur Aufnahme des Lagerbolzens aufweist.

Bei einer Belastung eines solchen Buchsenlagers im wesentlichen in Druckrichtung ist der U-förmige Bügel zweckmäßigerweise außenliegend zum Federkörper angeordnet und umgreift mit seinen freien Schenkeln den Federkörper seitlich und radial nach innen.

Bei einer Belastung im wesentlichen in Zugrichtung kann der U-förmige Bügel innenliegend zum Federkörper mit radial nach innen gerichteten Schenkeln angeorndet sein.

Je nach gewünschter Richtung der Hauptsteifigkeit kann dabei der Federkörper koaxial zur Außenbuchse oder aber auch querliegend zur Außenbuchse angeordnet sein.

Bei einer querliegenden Anordnung ist es zweckmäßig, wenn der ringförmige Federkörper aus zwei gesonderten, parallel und mit Abstand voneinander verlaufenden Einzelfedern ausgebildet und der U-förmige Bügel ein sich quer über die beiden Einzelfedern erstreckendes Basisteil mit zwei schmaleren, sich im Zwischenraum zwischen den beiden Einzelfedern erstreckenden Schenkeln aufweist.

Bei einer Belastung des Buchsenlages in Druckrichtung ist es zweckmäßig, wenn zur Ankopplung des Federkörpers an die Außenbuchse auf der Außenseite des Federkörpers über eine Gummizwischenlage eine Halteplatte anvulkanisiert ist, die mit der Außenbuchse starr verbunden ist.

Bei überwiegend Zugbelastung kann zur Ankopplung des Federkörpers an die Außenbuchse über eine Gummizwischenlage ein den Federkörper umgreifender Ring anvulkanisiert sein, der mit der Außenbuchse starr verbunden ist.

Zur besseren Festlegung kann auf der Innenseite der Außenbuchse ein brückenförmiger Bügel vorgesehen sein, der mit der Federkörperhalterung verschraubt ist.

Zur Wegbegrenzung bei Schwingungsbewegungen ist es zweckmäßig, wenn auf der Außenseite des Federkörpers ein mindestens bis nahe an die Außenbuchse reichendes, elastisches Anschlagpolster aufvulkanisiert ist.

Ferner können einander gegenüberliegend innerhalb des Federkörpers Gummipolster als Druckanschläge vorgesehen sein. Dabei kann der eine Druckanschlag durch ein Gummipolster gebildet sein, das zumindest den freien Zwischenraum zwischen den radial einragenden Schenkeln des U-förmigen Bügels ausfüllt.

Zur Bewegungsbegrenzung in der Buchsenebene ist es zweckmäßig, wenn innerhalb der Außenbuchse seitlich und parallel zum Anschlagpolster starre Anschläge vorgesehen sind.

Zur Bewegungsbegrenzung quer zur Buchse können auf gegenüberliegenden Stirnkanten der Außenbuchse beidseitig des Anschlagpolsters kreisabschnittförmige Anschlagleisten angeordnet sein.

Zum Erreichen spezieller Federkennlinien ist es ferner zweckmäßig, wenn der Federkörper im vorgespannten Zustand durch entsprechende Überdimensionierung eines der elastischen Anschlagpolster in die Außenbuchse eingebaut ist.

Anhand einer schematischen Zeichnung sind Aufbau und Funktionsweise von Ausführungsbeispielen nach der Erfindung näher erläutert. Dabei zeigen
- Fig. 1: einen Querschnitt durch ein Buchsenlager in Druckbeanspruchung und mit koaxial angeordneten Außenbuchse und Federkörper,
- Fig. 2: einen Längsschnitt durch das Buchsenlager nach Fig. 1 entsprechende der Schnittlinie II-II,
- Fig. 3: einen Querschnitt durch ein Buchsenlager mit im wesentlichen Zugbeanspruchung und koaxialer Anordnung von Außenbuchse und Federkörper,
- Fig. 4: einen Längsschnitt durch ein solches Lager entsprechend der Schnittlinie IV-IV nach Fig. 3,
- Fig. 5: einen Längsschnitt durch ein Buchsenlager in Druckbeanspruchung mit quer zur Außenbuchse angeordnetem Federkörper entsprechend der Schnittlinie V-V nach Fig. 6,
- Fig. 6: einen Querschnitt durch ein entsprechendes Buchsenlager,
- Fig. 7: einen Längsschnitt durch ein Buchsenlager in Zugbeanspruchung mit quer zur Außenbuchse angeordnetem Federkörper entsprechend der Schnittlinie VII-VII nach Fig. 8 und
- Fig. 8: einen Querschnitt durch ein entsprechendes zugbeanspruchtes Buchsenlager.

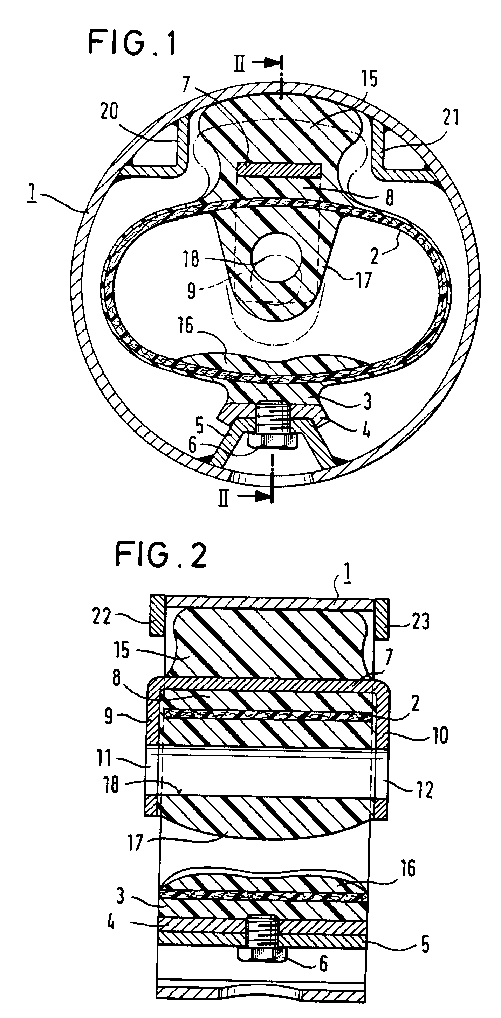

Wie man aus Fig. 1 ersieht, ist innerhalb einer zylindrischen Außenbuchse 1 aus Metall und koaxial zu dieser ein ovaler Federkörper 2 aus faserverstärktem Kunststoff angeordnet. Dieser Federkörper 2 besteht aus einem Wickelkörper aus mehreren konzentrischen Wickellagen von in Umfangsrichtung des Wickelkörpers und quer zur Belastungsrichtung verlaufenden Fasern und mindestens einer Lage aus im Winkel zu den anderen Lagen verlaufenden Fasern. Auf der Unterseite des Federkörpers 2 ist über eine Gummizwischenschicht 3 eine metallische Halteplatte 4 anvulkanisiert, die gegen einen brückenförmigen Bügel 5 auf der Innenseite der Außenbuchse 2 mittels einer Schraube 6 starr befestigt ist.

Zur Festlegung des nicht näher dargestellten abzustützenden Lagerbolzens ist auf der gegenüberliegenden Seite ein den Federkörper 2 umgreifender U-förmiger Bügel 7 über eine entsprechende Gummizwischenlage 8 anvulkanisiert, wobei die beiden freien Schenkel 9 und 10 des Bügels 7 den Federkörper 2 seitlich umfassen und radial nach innen gerichtet sind. In diesen freien Schenkeln 9 und 10 sind dann Bohrungen 11 und 12 zur Aufnahme des Lagerbolzens vorgesehen.

Die Basis des Bügels 7 überdeckend und mit der Gummizwischenlage 8 in Verbindung stehend ist auf der Außenseite ein gewölbtes Anschlagpolster aus Gummi vorgesehen, das sich im dargestellten entlasteten Zustand an der Innenwandung der Außenbuchse 1 abstützt. In gleicher Weise sind innerhalb des Federkörpers 2 einander gegenüberliegende Anschlagpolster 16 und 17, wobei das Anschlagpolster 17 den gesamten freien Raum zwischen den Schenkeln 9 und 10 des Bügels 7 ausfüllt und sich noch darüber hinaus erstreckt, wobei dieses Gummipolster 17 eine entsprechende Ausnehmung 18 zwischen den beiden Bohrungen 11 und 12 für den Lagerbolzen aufweist.

Das dargestellte Buchsenlager ist im wesentlichen in Druckrichtung belastet und kann dabei im vorgespannten Zustand eingebaut werden, wozu das obere Anschlagpolster eine größere Höhe aufweist, als sie an sich zur Überbrückung des Spaltes zwischen der Oberseite der Ringfeder 2 und der Außenbuchse 1 erforderlich ist. Mit einer derartigen Vorspannung läßt sich eine S-förmige Federkennlinie erreichen, wodurch sich eine niedrige statische und dynamische Steifigkeit im Arbeitspunkt und ein progressives Verhalten im Zug- und im Druckbereich außerhalb des Arbeitspunktes ergibt.

Zur Begrenzung von Bewegungen des Federkörpers 2 in der Buchsenebene sind beiderseits des Anschlagpolsters 15 winkelförmige Anschlgäge 20 und 21 auf der Innenseite der Außenbuchse 2 eingesetzt. Zu einer Bewegungsbegrenzung quer zur Buchse können dann zusätzlich noch auf den gegenüberliegenden Stirnkanten der Außenbuchse 1 beidseitig des Anschlagpolsters 15 kreisabschnittförmige Anschlagleisten 22 und 23 angeordnet sein, wie man das insbesondere aus Fig. 2 ersieht.

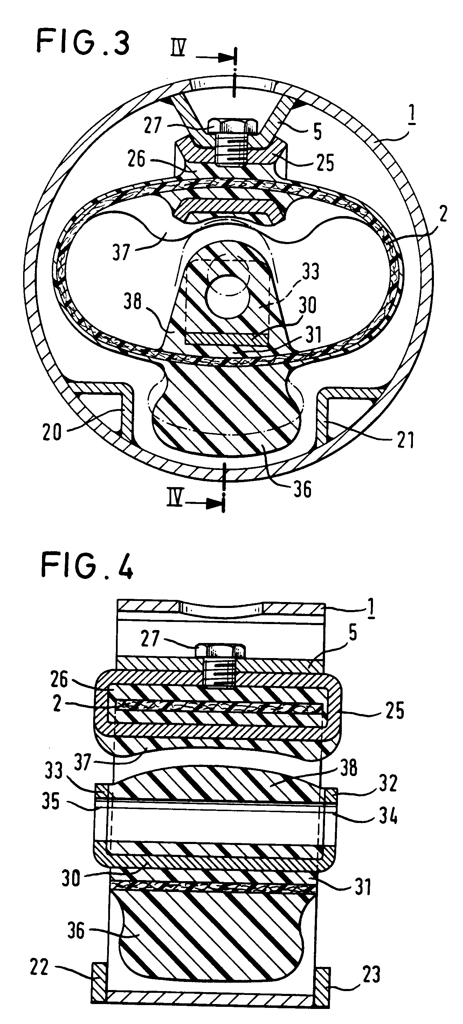

Ein Buchsenlager, bei dem der innenliegende Federkörper im wesentlichen auf Zug beansprucht ist, ist in den Fig. 3 und 4 dargestellt. Hierbei ist ebenfalls innerhalb der Außenbuchse 1 und koaxial dazu ein ovaler oder elliptischer Federkörper 2 angeordnet. Dieser ist jetzt zur Ankopplung an die Außenbuchse von einem den Federkörper 2 umschließenden Ring 25 umschlossen, der über eine Gummizwischenlage 26 mit dem Federkörper 2 in Verbindung steht und ebenfalls über eine Schraubverbindung 27 an den brückenförmigen Bügel 5 auf der Innenseite der Außenbuchse festgelegt ist.

Auf der gegenüberliegenden Seite ist jetzt innenliegend zum Federkörper 2 ein U-förmiger Bügel 30 angeordnet, der ebenfalls über eine Gummizwischenlage 31 mit dem Federkörper 2 verbunden ist und dessen seitliche Schenkel 32 und 33 mit entsprechenden Bohrungen 34 und 35 zur Aufnahme des Lagerbolzens radial nach innen ragen. Auf der Außenseite des Federkörpers 2 ist dabei ebenfalls ein Anschlagpolster 36 zur Bewegungsbegrenzung gegenüber der Außenbuchse in Zugrichtung vorgesehen. Auch innerhalb des Federkörpers 2 sind einander gegenüberliegend Anschlagpolster 37 und 38 integriert, die bei entsprechenden Druckbelastungen in Eingriff kommen.

Auch ein derartiges Buchsenlager kann in der Weise vorgespannt werden, daß beim Einvulkanisieren der Anschlagpolster 37 und 38 der Federkörper 2 in Zugrichtung gestreckt und ein größeres Anschlagpolster einvulkanisiert wird als es an sich dem freien Raum bei entspanntem Federkörper 2 entspricht.

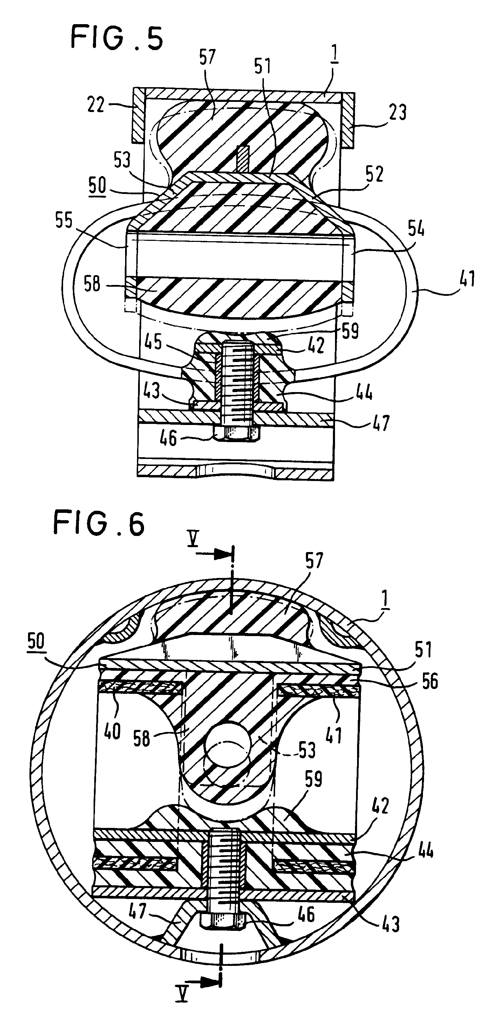

Wie man aus Fig. 5 und 6 ersieht, ist es aber auch möglich, den Federkörper quer zur Außenbuchse 1 einzubauen. Dabei besteht der Federkörper aus zwei gesonderten parallel zueinander und mit Abstand voneinander verlaufenden Einzelfedern 40 und 41, die auf der Ankopplungsseite zur Außenbuchse 1 über zwei metallische Stege 42 und 43 sowie dazwischenliegende Gummischichten 44 miteinander verbunden und über eine, eine Abstandshülse 45 zwischen den beiden Stegen 42 und 43 durchsetzende Schraube 46 auf den brückenförmigen Bügel 47 auf der Innenseite der Außenbuchse festgelegt sind.

Zur Festlegung des Lagerbolzens ist auf der gegenüberliegenden Seite ein U-förmiger Bügel 50 mit einem sich quer über beide Einzelfedern 40 und 41 erstreckenden Basisteil 51 und zwei schmaleren, sich im Zwischenraum zwischen den beiden Einzelfedern 40 und 41 erstreckenden Schenkeln 52 und 53 mit den Aufnahmebohrungen 54 und 55 für den Lagerbolzen ebenfalls über eine Gummischicht 56 anvulkanisiert.

Auch hierbei ist auf der Außenseite des Bügels 50 ein Anschlagpolster 57 und innerhalb der Federkörper 40 und 41 entsprechende Anschlagpolster 58 zwischen den Bügelschenkeln 52 und 53 sowie ein Anschlagpolster 59 vorgesehen.

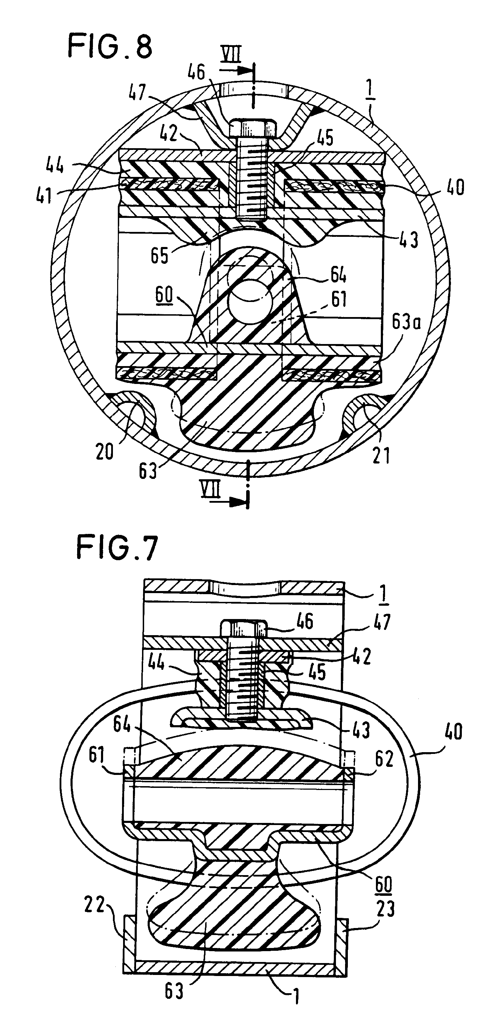

Bei einem Quereinbau des Federkörpers und einer Belastung in Zugrichtung ist eine Konstruktion entsprechend den Fig. 7 und 8 möglich. Hierbei ist ein entsprechener U-förmiger Bügel 60 mit seinen beiden schmaleren Schenkeln 61 und 62 auf der Innenseite der beiden Einzelfedern 40 und 41 angeordnet und gegenüber diesen ebenfalls über eine Gummizwischenlage 62 und das nach außen ragende Anschlagpolster 63 festgelegt.

Die Arretierung gegenüber der Außenbuchse 1 erfolgt in gleicher Weise wie bei dem Ausführungsbeispiel nach Fig. 5 und 6 mittels zweier, die Einzelfedern 40 und 41 umfassende Leisten 42 und 43 sowie dazwischenliegenden Gummischichten 44 sowie einer die Abstandshülse 45 durchsetzenden Schraube 46. Entsprechende Gummipolster 64 und 65 auf der Innenseite der Einzelfedern 40 und 41 bewirken einen Anschlag in Druckrichtung bei übermäßigen Schwingungsausschlägen.

Mit den dargestellten 4 verschiedenen Anordnungen der Federkörper aus faserverstärktem Kunststoff innerhalb der sie umgreifenden Buchse ergeben sich damit auch verschiedene Federkennlinien in den drei Raumrichtungen, so daß damit allen gewünschten Anforderungen bezüglich der jeweiligen Federsteifigkeit nachgekommen werden kann. Durch eine entsprechende Vorspannung läßt sich dabei auch bei allen Bauvarianten eine S-förmige Federkennlinie erzielen, die eine niedrige Steifigkeit im Arbeitspunkt bewirkt.

Grundsätzlich ergibt sich damit ein Buchsenlager, das wartungsfrei ist, keine Setzungserscheinungen bei statischer Belastung aufweist und eine optimale schwingungsisolierende Lagerung gewährleistet.

## Patentansprüche

1. Buchsenlager, insbesondere für Kraftfahrzeuge, mit einer zylindrischen Außenbuchse (1) und einer innenliegenden, elastischen Abstützung eines Lagerbolzens, wobei innerhalb der Außenbuchse (1) ein ringförmiger Körper (2; 40, 41) angeordnet ist, der in einem diskreten Umfangsbereich elastisch an die Außenbuchse (1) angekoppelt ist und eine über eine Gummizwischenlage (8; 56) an den ringförmigen Körper (2; 40, 41) angekoppelte Innenbuchse (7; 30; 50; 60) zur Aufnahme des Lagerbolzens aufweist, **dadurch gekennzeichnet**, **daß** der ringförmige Körper als Federkörper (2; 40, 41) ausgebildet ist, aus faserverstärktem Kunststoff besteht und bezogen auf den Umfangsbereich der elastischen Ankopplung des Federkörpers (2; 40, 41) an die Außenbuchse (1) im gegenüberliegenden Umfangsbereich die Gummizwischenlage (8; 56) aufweist.

2. Buchsenlager nach Anspruch 1, dadurch gekennzeichnet, daß der ringförmige Federkörper (2; 40, 41) ovalen oder elliptischen Querschnitt aufweist.

3. Buchsenlager nach Anspruch 1 oder 2, dadurch gekennzeichnet, daß die Innenbuchse aus einem U-förmigen Bügel (7; 30; 50; 60) besteht, der sich mit seinem zwischen den beiden freien Schenkeln (9, 10; 32, 33; 52, 53; 61, 62) erstreckenden Basisteil (7; 30; 51; 60) in Achsrichtung des ringförmigen Federkörpers (2; 40, 41) erstreckt und in seinen freien Schenkeln (9, 10; 32, 33; 52, 53; 61, 62) Bohrungen zur Aufnahme des Lagerbolzens aufweist.

4. Buchsenlager nach Anspruch 3, dadurch gekennzeichnet, daß bei einer Belastung im wesentlichen in Druckrichtung der U-förmige Bügel (7; 50) anßenliegend zum Federkörper (2; 40, 41) angeordnet und mit seinen freien Schenkeln (9, 10; 52, 53) den Federkörper (2; 40, 41) seitlich und radial nach innen umgreift.

5. Buchsenlager nach Anspruch 3, dadurch gekennzeichnet, daß bei einer Belastung im wesentlichen in Zugrichtung der U-förmige Bügel (30; 60) innenliegend zum Federkörper (2; 40, 41) mit radial nach innen gerichteten Schenkeln (32, 33; 61, 62) angeordnet ist.

6. Buchsenlager nach einem der Ansprüche 1 bis 5, dadurch gekennzeichnet, daß der Federkörper (2) koaxial zur außenbuchse (1) angeordnet ist.

7. Buchsenlager nach einem der Ansprüche 1 bis 5, dadurch gekennzeichnet, daß der Federkörper (40, 41) querliegend zur Außenbuchse (1) angeordnet ist.

8. Buchsenlager nach Anspruch 3 und 7, dadurch gekennzeichnet, daß de ringförmige Federkörper aus zwei gesonderten, parallel und mit Abstand voneinander verlaufenden Einzelfedern (40, 41) ausgebildet ist, und daß der U-förmige Bügel (50; 60) einem sich quer über beide Einzelfedern (40, 41) erstreckenden Basisteil (51;) mit zwei schmaleren, sich im Zwischenraum zwischen den beiden Einzelfedern (40, 41) erstreckenden Schenkeln (52, 53; 61, 62) aufweist.

9. Buchsenlager nach Anspruch 1 und 4, dadurch gekennzeichnet, daß zur Ankopplung des Federkörpers (2, 40, 41) an die Außenbuchse (1) auf der Außenseite des Federkörpers über eine Gummizwischenlage (3) Halteplatte (4) anvulkanisiert ist, die mit der Außenbuchse (1) starr verbunden ist.

10. Buchsenlager nach Anspruch 1 und 5, dadurch gekennzeichnet, daß zur Ankopplung des Federkörpers (2) an die Außenbuchse (1) über eine Gummizwischenlage (26) ein den Federkörper (2) umgreifender Ring (25) anvulkanisiert ist, der mit der Außenbuchse (1) starr verbunden ist.

11. Buchsenlager nach Anspruch 9 und 10, dadurch gekennzeichnet, daß auf der Innenseite der Außenbuchse (1) ein brückenförmiger Bügel (5; 47) vorgesehen ist, mit dem eine Halterung für den Federkörper verschraubt ist.

12. Buchsenlager nach Anspruch 1 bis 11, dadurch gekennzeichnet, daß auf der Außenseite des Federkörpers (2; 40, 41) ein mindestens bis nahe an die Außenbuchse (1) reichendes, elastisches Anschlagpolster (15; 36; 57; 63) aufvulkanisiert ist.

13. Buchsenlager nach Anspruch 1 bis 12, dadurch gekennzeichnet, daß einander gegenüberliegend innerhalb des Federkörpers (2; 40, 41) Gummipolster (16, 17; 37, 38; 58, 59; 64, 65) als Druckanschläge vorgesehen sind.

14. Buchsenlager nach Anspruch 13, dadurch gekennzeichnet, daß der eine Druckanschlag durch ein Gummipolster (17; 38; 58; 64) gebildet ist, das zumindest den freien Zwischenraum zwischen den radial einragenden Schenkeln des U-förmigen Bügels (7; 30; 50; 60) ausfüllt.

15. Buchsenlager nach Anspruch 12, dadurch gekennzeichnet, daß innerhalb der Außenbuchse (1) seitlich und parallel zum außenliegenden Anschlagpolster (15; 36; 57; 63) starre Anschläge (20, 21) zur Bewegungsbegrenzung in der Buchsenebene vorgesehen sind.

16. Buchsenlager nach Anspruch 12, dadurch gekennzeichnet, daß auf gegenüberliegenden Stirnkanten der Außenbuchse (1) beidseitig des Anschlagpolsters (15; 36; 57; 63) kreisabschnittförmige Anschlagleisten (22, 23) angeordnet sind.

17. Buchsenlager nach Anspruch 1 bis 16, dadurch gekennzeichnet, daß der Federkörper im vorgespannten Zustand durch entsprechende Überdimensionierung eines der elastischen Anschlagpolster in die Außenbuchse eingebaut ist.

## Claims

1. Bush bearing, in particular for motor vehicles, with a cylindrical outer bush (1) and an internal, flexible support for a bearing pin, an annular element (2; 40, 41) being arranged inside the outer bush (1), which element is flexibly coupled in a discrete circumferential area to the outer bush (1) and comprises an inner bush (7; 30; 50; 60), which is coupled via a rubber intermediate layer (8; 56) to the annular element (2; 40, 41), for holding the bearing pin, characterised in that the annular element is formed as a spring element (2; 40, 41), consists of fibre-reinforced plastic and comprises the rubber intermediate layer (8; 56) in the circumferential area which is opposite that in which the spring element (2; 40, 41) is flexibly coupled to the outer bush (1).

2. Bush bearing according to claim 1, characterised in that the annular spring element (2; 40, 41) has an oval or elliptic cross section.

3. Bush bearing according to claim 1 or 2, characterised in that the inner bush consists of a U-shaped strap (7; 30; 50; 60), which extends by way of its base part (7; 30; 51; 60) joining the two free legs (9, 10; 32, 33; 52, 53; 61, 62) in the axial direction of the annular spring element (2; 40, 41) and comprises bores for holding the bearing pin in its free legs (9, 10; 32, 33; 52, 53; 61, 62).

4. Bush bearing according to claim 3, characterised in that when the bearing is loaded essentially in the compression direction the U-shaped strap (7; 50) is arranged outside of the spring element (2; 40, 41) and its free legs (9, 10; 52, 53) embrace the spring element (2; 40, 41) at the sides while extending radially inwards.

5. Bush bearing according to claim 3, characterised in that when the bearing is loaded essentially in the tension direction the U-shaped strap (30; 60) is arranged inside the spring element (2; 40, 41) with its legs (32, 33; 61, 62) directed radially inwards.

6. Bush bearing according to one of claims 1 to 5, characterised in that the spring element (2) is arranged coaxially with the outer bush (1).

7. Bush bearing according to one of claims 1 to 5, characterised in that the spring element (40, 41) is arranged transversely to the outer bush (1).

8. Bush bearing according to claims 3 and 7, characterised in that the annular spring element is formed from two separate individual springs (40, 41), which extend in parallel and at a distance from one another, and that the U-shaped strap (50; 60) comprises a base part (51), which extends transversely over the two individual springs (40, 41), and two narrower legs (52; 53; 61, 62), which extend in the space between the two individual springs (40, 41).

9. Bush bearing according to claims 1 and 4, characterised in that a holding plate (4), which is rigidly connected to the outer bush (1), is attached to the outside of the spring element (2, 40, 41) via a moulded-on rubber intermediate layer (3) in order to couple the spring element to the outer bush (1).

10. Bush bearing according to claims 1 and 5, characterised in that a ring (25), which embraces the spring element (2) and is rigidly connected to the outer bush (1), is attached via a moulded-on rubber intermediate layer (26) in order to couple the spring element (2) to the outer bush (1).

11. Bush bearing according to claims 9 and 10, characterised in that a bridge-shaped strap (5; 47) is provided on the inside of the outer bush (1), to which strap a holder for the spring element is screwed.

12. Bush bearing according to claims 1 to 11, characterised in that a flexible stop pad (15; 36; 57; 63), which extends at least into the vicinity of the outer bush (1), is moulded onto the outside of the spring element (2; 40, 41).

13. Bush bearing according to claims 1 to 12, characterised in that rubber pads (16, 17; 37, 38; 58, 59; 64, 65) are provided opposite one another inside the spring element (2; 40, 41) as pressure stops.

14. Bush bearing according to claim 13, characterised in that one pressure stop is formed by a rubber pad (17; 38; 58; 64), which fills at least the free space between the legs of the U-shaped strap (7; 30; 50; 60), which project radially inwards.

15. Bush bearing according to claim 12, characterised in that rigid stops (20, 21) are provided inside the outer bush (1) at the sides of and parallel to the outer stop pad (15; 36; 57; 63) to limit the movement in the plane of the bush.

16. Bush bearing according to claim 12, characterised in that stop bars (22, 23), which are in the form of circular segments, are arranged on opposite end edges of the outer bush (1) on both sides of the stop pad (15; 36; 57; 63).

17. Bush bearing according to claims 1 to 16, characterised in that the spring element is fitted in the outer bush in the preloaded state by appropriately overdimensioning one of the flexible stop pads.

## Revendications

1. Support en forme de manchon, notamment pour un véhicule automobile, comportant un manchon extérieur (1) cylindrique et, à l'intérieur, un appui élastique pour un boulon-support, un anneau (2;40,41) étant disposé dans le manchon extérieur (1), étant couplé élastiquement au manchon extérieur (1) dans une partie périphérique délimitée et comportant : un manchon intérieur (7;30;50;60) destiné à recevoir le boulon-support et couplé à l'anneau (2;40,41) par une couche intermédiaire (8;56) en caoutchouc, caractérisé en ce que l'anneau est conformé en pièce élastique (2;40,41), est en matière plastique renforcée de fibres et, par rapport à la partie périphérique du couplage élastique de la pièce élastique (2;40,41) au manchon extérieur (1), comporte la couche intermédiaire (8;56) en caoutchouc dans la partie périphérique opposée.

2. Support en forme de manchon suivant la revendication 1, caractérisé en ce que la pièce élastique (2; 40,41) annulaire a une section transversale ovale ou elliptique.

3. Support en forme de manchon suivant la revendication 1 ou 2, caractérisé en ce que le manchon intérieur est constitué d'un étrier (7;30;50;60) en forme de U qui, par sa base (7;30;51;60) s'étendant entre les deux branches (9,10;32,33;52,53;61,62) libres, s'étend dans la direction axiale de la pièce élastique (2;40;41) annulaire, et qui comporte, dans ses branches (9,10;32,33;52,52;61,62) libres, des trous de réception du boulon-support.

4. Support en forme de manchon suivant la revendication 3, caractérisé en ce que pour une charge sensiblement dans la direction de compression, l'étrier (7;50) en forme de U est disposé à l'extérieur par rapport à la pièce élastique (2;40,41) et enveloppe de ses branches (9,10; 52,53) libres la pièce élastique (2;40,41) latéralement et radialement vers l'intérieur.

5. Support en forme de manchon suivant la revendication 3, caractérisé en ce que pour une charge sensiblement dans la direction de traction, l'étrier (30;60) en forme de U est disposé à l'intérieur par rapport à la pièce élastique (2;40,41) en ayant ses branches (32,33;61,62) dirigées radialement vers l'intérieur.

6. Support en forme de manchon suivant l'une des revendications 1 à 5, caractérisé en ce que la pièce élastique (2) est coaxiale au manchon extérieur (1).

7. Support en forme de manchon suivant l'une des revendications 1 à 5, caractérisé en ce que la pièce élastique (40,41) est disposée transversalement au manchon extérieur (1).

8. Support en forme de manchon suivant la revendication 3 ou 7, caractérisé en ce que la pièce élastique annulaire est constituée de deux ressorts (40,41) distincts, parallèles et s'étendant à distance l'un de l'autre, et en ce que l'étrier (50;60) en forme de U comporte une base (51) s'étendant transversalement sur les deux ressorts (40,41) et ayant deux branches (52,53; 61,62) plus étroites s'étendant dans l'intervalle entre les deux ressorts (40,41).

9. Support en forme de manchon suivant la revendication 1 ou 4, caractérisé en ce que pour coupler la pièce élastique (2,40,41) au manchon extérieur (1), une plaque de fixation (4), qui est reliée rigidement au manchon extérieur (1), est vulcanisée sur le côté extérieur de la pièce élastique par l'intermédiaire d'une couche intermédiaire (3) en caoutchouc.

10. Support en forme de manchon suivant la revendication 1 ou 5, caractérisé en ce que, pour coupler la pièce élastique (2) au manchon extérieur (1), une bague (25), qui est reliée rigidement au manchon extérieur (1) et qui entoure la pièce élastique (2), est vulcanisée au manchon extérieur (1) par une couche intermédiaire (26) en caoutchouc.

11. Support en forme de manchon suivant la revendication 9 ou 10, caractérisé en ce que du côté intérieur du manchon extérieur (1), est prévu un étrier (5; 47) en forme de pontet, par lequel est vissée une fixation pour la pièce élastique.

12. Support en forme de manchon suivant l'une des revendications 1 à 11, caractérisé en ce que du côté extérieur de la pièce élastique (2;40,41) est vulcanisé un coussin (15; 36;57;63) élastique de butée, allant au moins jusqu'à proximité du manchon extérieur (1).

13. Support en forme de manchon suivant l'une des revendications 1 à 12, caractérisé en ce qu'il est prévu comme butées de pression, des coussins (16,17;37,38;58,59; 64,65) en caoutchouc, mutuellement opposées dans la pièce élastique (2;40,41).

14. Support en forme de manchon suivant la revendication 13, caractérisé en ce que l'une des butées de pression est formée d'un coussin (17;38;58;64) en caoutchouc, qui emplit au moins l'intervalle libre entre les branches radiales de l'étrier en forme de U (7;30;50;60).

15. Support en forme de manchon suivant la revendication 12, caractérisé en ce qu'à l'intérieur du manchon extérieur (1), sont prévus latéralement et parallèlement aux coussins (15;36;57;63) de butée se trouvant à l'extérieur, des butées (20,21) rigides de limitation du mouvement dans le plan du manchon.

16. Support en forme de manchon suivant la revendication 12, caractérisé en ce que sur des arêtes frontales opposées du manchon extérieur (1), sont prévus, de part et d'autre du coussin (15;36;57;63) de butée, des réglettes (22,23) de butée, en forme de segments de cercle.

17. Support en forme de manchon suivant l'une des revendications 1 à 16, caractérisé en ce que le corps élastique est inséré à l'état précontraint dans le manchon extérieur par surdimensionnement adéquat de l'un des coussins élastiques de butée.
